# FASCICULE DE BREVET EUROPEEN

(11) **EP 0 625 325 B1**
(45) Date de publication et mention de la délivrance du brevet: **14.02.1996**
(21) Numéro de dépôt: 94460011.3
(22) Date de dépôt: 27.04.1994
(51) Int. Cl.: A47J 27/20

(54) **Ensembles empilables de récipients destinés à contenir des produits alimentaires pendant leur cuisson**
Stapelbare Behältereinheiten, die Nahrungsmittel während ihres Kochvorgangs enthalten
Stackable container units for containing food products during their cooking

(30) Priorité: 27.04.1993 FR 9305206
(43) Date de publication de la demande: 23.11.1994
(73) Titulaire: ARMOR INOX SA, F-56430 Mauron (FR)
(72) Inventeur: Dreano, Claude, F-56430 Mauron (FR)
(74) Mandataire: Le Guen, Louis François

(56) Documents cités:
- EP-A- 0 292 417
- FR-A- 2 087 450
- FR-A- 2 523 359
- FR-A- 2 599 341
- FR-A- 2 601 653

## Description

La présente invention concerne des ensembles empilables de récipients destinés à contenir des produits alimentaires pendant leur cuisson, chaque ensemble étant essentiellement constitué de goulottes longitudinales qui forment les récipients et qui sont disposées les unes à côté des autres. Un tel ensemble est connu du document EP-A-292 417.

A titre d'exemple, les produits alimentaires à cuire dans de tels ensembles sont des jambons, les goulottes jouant alors également le rôle de moules. Par ailleurs, la cuisson industrielle de jambons se fait généralement dans des cellules de volume important dans lequel on introduit pendant la cuisson un fluide caloporteur.

On connaît déjà des ensembles empilables, destinés à la cuisson industrielle des jambons, qui sont constitués de goulottes longitudinales, deux plaques de renfort transversales étant respectivement reliées aux extrémités frontales des goulottes. Deux supports latéraux, respectivement formés d'une barre longitudinale et de deux pieds dont les extrémités supérieures sont respectivement fixées aux bouts de la barre, complétent chaque ensemble.

On pourra à ce sujet se reporter aux structures décrites dans les documents FR-A-2 599 341, FR-A-2 601 653, FR-A-2 087 450 et EP-A-292 417. Dans le document EP-A-292 417, on décrit des ensembles du genre mentionné ci-dessus dans lequel chaque goulotte est divisée en compartiments alignés par des cloisons transversales individuelles.

Les objets de la présente invention consistent à apporter des perfectionnements et améliorations aux ensembles déjà connus qui font partie de l'état de la technique. Comme mentionné ci-dessus, les goulottes peuvent servir de moules. A cet effet, on divise la longueur de chaque goulotte en plusieurs tronçons et on monte dans la goulotte des cloisons individuelles qui délimitent les tronçons. Les plus simples de ces cloisons sont des plaques métalliques individuelles présentant le profil de la goulotte. Toutefois, en pratique, de telles cloisons très simples, telles que celles décrites dans le document EP-A-292 417, présentent des inconvénients. Au cours du montage et du soudage, elles peuvent ne pas rester strictement transversales ce qui altère la forme du jambon cuit. Pour minimiser cet inconvénient, on peut prévoir des cloisons qui descendent jusqu'au fond de la goulotte, mais alors les exudats qui sont produits au cours de la cuisson ne peuvent plus s'écouler et altèrent encore la forme du produit fini. De plus, le lavage des goulottes après utilisation est rendu très difficile.

On connaît par ailleurs des appareillages consistant en des demi-caissons et utilisés pour la fabrication des fromages longs, tels que ceux décrits dans le document FR-A-2 087 450. Chaque demi-caisson comprend des cloisonnements amovibles formés de cloisons longitudinales et transversales, par rapport à l'axe des rigoles. Cet agencement, qui vise à faciliter l'égouttage et le démoulage des fromages, présente l'inconvénient majeur de ne pas assurer la position des parois supérieures des rigoles lors des manipulations.

Un objet de l'invention consiste donc à prévoir un système de cloisons qui évitent ces inconvénients.

Par ailleurs, les ensembles sont manipulés par des moyens industriels afin de les empiler pour former des piles destinées à entrer dans les cellules de cuisson. Dans la pratique, on utilise des chariots élévateurs dont les fourches supportent les ensembles. Toutefois, les fourches ne sont, de préférence, pas mises directement en contact avec les faces inférieures des goulottes sans les endommager, car ces faces sont relativement de faible épaisseur pour améliorer l'échange thermique entre le fluide caloporteur et le contenu des goulottes.

Un autre objet de l'invention consiste à prévoir des moyens permettant de manipuler les ensembles au moyen de chariot élévateur sans endommager les fonds des goulottes avec leur fourche.

Suivant une caractéristique de l'invention, il est prévu une pluralité de longues plaques transversales de cloisonnage qui enjambent les goulottes d'un ensemble et qui ont chacune, en face de chaque goulotte, un profil qui épouse la forme de la goulotte, au moins dans sa partie supérieure, de manière à former une cloison et à laisser dans le bas de chaque plaque un espace libre entre elle et le fond de la goulotte. Cet espace libre permet aux jus de cuisson de s'écouler et facilite le lavage des goulottes, ce qui est très important.

Suivant une autre caractéristique, entre deux goulottes voisines, est ménagé un espace vide, qui améliore les échanges thermiques du fluide caloporteur et qui facilite le lavage après utilisation.

Suivant une autre caractéristique, entre les supports latéraux et les parois externes des goulottes externes, sont respectivement montées des plaques de renfort longitudinales et verticales qui descendent au-dessous du plan horizontal des fonds des goulottes mais restent au-dessus des extrémités inférieures des pieds, et dont la partie inférieure est rabattue vers l'intérieur, de façon à créer une surface support qui associée à celle de l'autre plaque de renfort peut être soulevée par les fourches d'un chariot élévateur.

Il est prévu, pour assurer la verticalité des plaques transversales de cloisonnage, entre les plaques trasversales de renfort avant et arrière, dans les espaces libres entre deux goulottes voisines, des barres qui sont soudées aux plaques transversales de cloisonnage en leurs points d'intersection mutuels.

Un autre objet de la présente invention consiste à améliorer et à mieux assurer la verticalité des plaques transversales de cloisonnage, en prévoyant au lieu de barres soudées, des plaques longitudinales verticales.

Suivant une autre caractéristique, il est prévu, dans les espaces libres entre deux goulottes voisines, des plaques longitudinales verticales montées entre les plaques transversales de renfort avant et arrière, à chaque point d'intersection avec une plaque transversale de cloisonnage, la plaque longitudinale présentant une encoche ouverte vers le bas de largeur correspondant à l'épaisseur de la plaque transversale de cloisonnage et chaque plaque transversale de cloisonnage présentant une encoche ouverte vers le haut de largeur égale à l'épaisseur de la plaque longitudinale, les deux encoches étant emboîtées, puis soudées en angle.

Suivant une autre caractéristique, il est prévu encore des encoches ouvertes vers le bas dans chaque plaque transversale de cloisonnage en face respectivement de chaque portion verticale de paroi de goulotte.

Suivant une autre caractéristique, en face des encoches ouvertes vers le bas de chaque plaque transverdale de cloisonnage, il est prévu, dans chaque partie verticale de paroi de goulotte, une encoche ouverte vers le haut.

Suivant une autre caractéristique, entre les plaques longitudinales de renfort, sont prévues des plaques poutres transversales verticales dont le bord supérieur de chacune présente, sous chaque goulotte, une première découpe correspondant au profil du fond d'une goulotte et dont le bord inférieur présente, juste au-dessous de la première découpe, une seconde découpe correspondant au profil du dessus d'un couvercle, à chaque point d'intersection avec une plaque longitudinale, le bord supérieur de la plaque poutre présente une encoche qui coopère avec une encoche du bord inférieur de la plaque longitudinale, les deux encoches étant emboîtées.

Les caractéristiques de l'invention mentionnées ci-dessus, ainsi que d'autres, apparaîtront plus clairement à la lecture de la description suivante d'exemples de réalisation suivant l'invention, ladite description étant faite en relation avec les dessins joints, parmi lesquels:
la Fig. 1 est une vue schématique en perspective d'un premier exemple de réalisation d'un ensemble empilable de récipients destinés à contenir des produits alimentaires,
la Fig. 2 est une vue schématique en perspective d'une variante de l'exemple de réalisation de la Fig. 1 dans laquelle, sous chaque goulotte, est prévu un couvercle,
la Fig. 3 est une vue partielle, éclatée, en perspective, d'un point d'intersection d'une plaque longitudinale et d'une plaque transversale de cloisonnage, ainsi que des portions verticales des goulottes voisines du point d'intersection, et
la Fig. 4 est une vue partielle, éclatée, en perspective, d'un point d'intersection d'une plaque longitudinale et d'une plaque poutre.

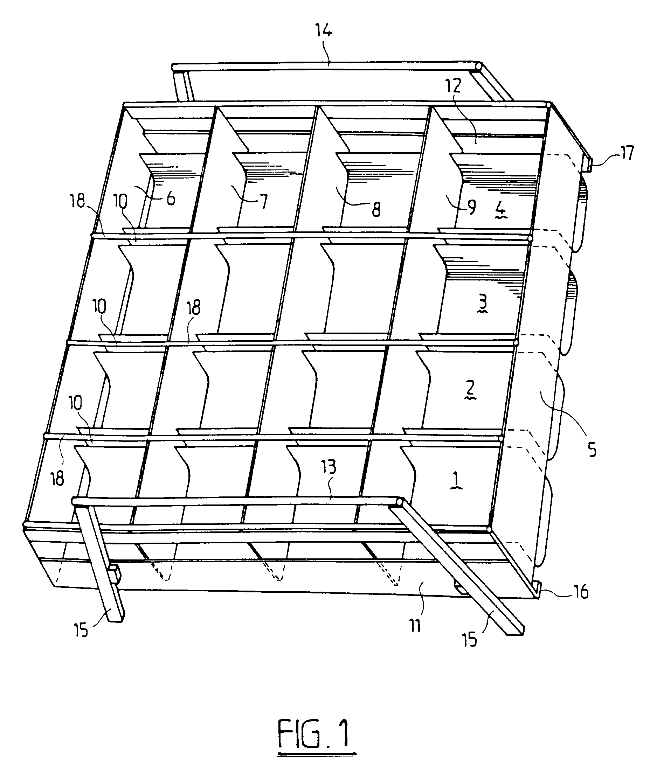

La Fig. 1 montre un ensemble empilable de récipients destinés à contenir des produits alimentaires, qui comporte quatre récipients en forme de goulottes longitudinales à profil en U, 1 à 4, disposées les unes à côté des autres. Chaque goulotte 1 à 4 comporte deux parois parallèles longitudinales qui sont, dans leurs parties hautes, verticales et qui se raccordent au fond horizontal par deux portions de surfaces cylindriques.

Les goulottes 1 à 4 sont, en bout, rendues solidaires de deux plaques de renfort transversales, une plaque avant 5 et une plaque arrière 6. Ces plaques de renfort transversales ont leur niveau supérieur un peu au-dessus de celui des parois latérales longitudinales des goulottes 1 à 4, mais le niveau de leurs bases est légèrement au-dessus de celui des fonds des goulottes pour permettre l'écoulement des jus de cuisson et pour faciliter le lavage.

Les goulottes 1 à 4 sont, de préférence, compartimentées par des plaques transversales de cloisonnage 7 à 9 qui forment des cloisons dans chaque goulotte. Dans l'exemple de réalisation montré, les plaques 7 à 9 enjambent chacune les quatre goulottes 1 à 4. Il faut noter que les goulottes voisines, par exemple 2 et 3, ont leurs parois adjacentes qui laissent entre elles un espace libre 10, ce qui améliore le passage du fluide caloporteur et facilite aussi le lavage. Il en résulte que les plaques 7 à 9 comportent chacune une fente verticale en face de chaque portion verticale de paroi de goulotte.

Pour assurer la verticalité des plaques de cloisonnage 7 à 9, sont prévues, entre les plaques de renfort 5 et 6, dans les espaces libres entre deux goulottes voisines, des barres 18 qui sont soudées, aux points d'intersection avec les plaques 7 à 9, à celles-ci.

Dans chaque goulotte, le côté inférieur de chaque plaque 7 à 9 est plus haut que le fond de la goulotte pour laisser s'échapper le jus de cuisson et pour faciliter le lavage.

L'ensemble empilable est complété par deux plaques de renfort longitudinales 11 et 12 qui sont montées sur les faces latérales, entre les parois latérales des goulottes externes 1 et 4, d'une part, et les supports latéraux constitués respectivement par les barres 13 et 14, et les pieds 15, d'autre part. Les parties inférieures 16 et 17 des plaques de renfort 11 et 12, qui descendent au-dessous du plan des fonds des goulottes, sont respectivement rabattues à 90° vers l'intérieur pour former des surfaces planes horizontales qui servent d'appui éventuel sur les fourches d'un chariot élévateur destiné à manipuler l'ensemble.

Les plaques 11 et 12 peuvent comprendre deux parties avec, entre elles, un intervalle. Elles sont, de préférence, reliées par leurs bouts aux bouts des plaques de renfort transversales 5 et 6 de façon à former avec celles-ci un cadre rigide.

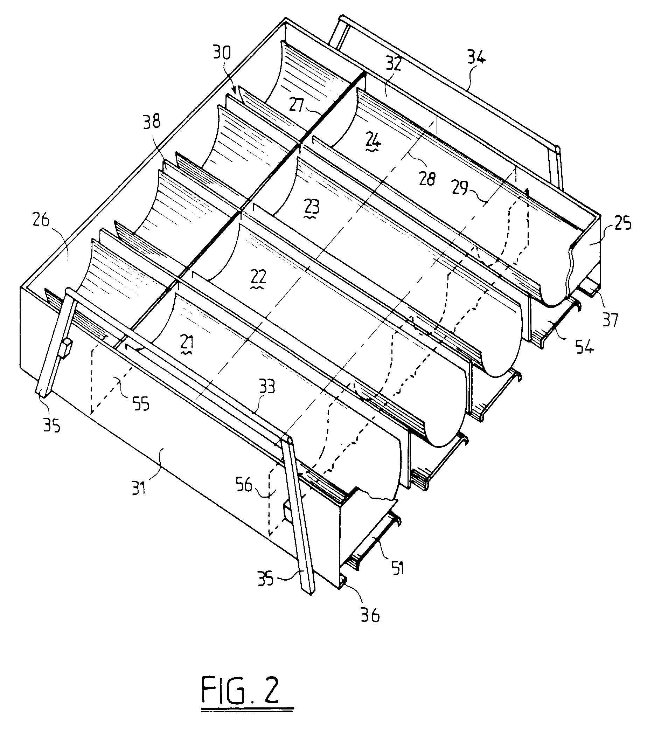

La Fig. 2 montre une variante de l'ensemble empilable de la Fig. 1, dans lequel sont prévues quatre goulottes longitudinales à profil semi-circulaire 21 à 24. Chaque goulotte 21 à 24 comporte deux parois latérales qui sont encore, dans leurs parties hautes, verticales et parallèles, et qui se raccordent à un fond dont la surface est semi-cylindriques.

Les goulottes 21 à 24 sont, en bout, rendues solidaires de deux plaques de renfort transversales, une plaque avant 25 et une plaque arrière 26, dont le niveau supérieur est un peu au-dessus de celui des parois latérales des goulottes 21 et 24, et le niveau de leurs bases est légèrement au-dessus de celui des fonds des goulottes, toujours pour permettre l'écoulement des jus de cuisson et pour faciliter le lavage.

Les goulottes sont compartimentées par des plaques transversales de cloisonnage 27 à 29 qui forment dans chaque goulotte des cloisons en les enjambant successivement. Un espace libre 30 est ménagé entre les goulottes voisines, par exemple 22 et 23 pour améliorer le passage du fluide caloporteur et faciliter le lavage.

Pour assurer la verticalité des plaques de cloisonnage 27 à 29, sont prévues, au milieu des espaces libres 30, des plaques longitudinales 38 qui sont rendues solidaires des plaques de renfort transversales 25 et 26.

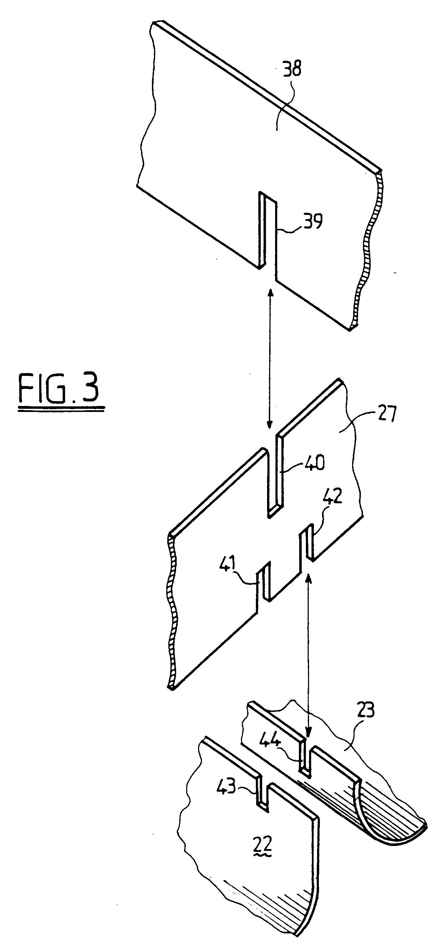

Comme le montre la Fig. 3 qui représente schématiquement une vue éclatée d'un point d'intersection d'une plaque longitudinale 38 et d'une plaque transversale de cloisonnage 27, le bord inférieur de la plaque 38 présente une encoche 39 ouverte vers le bas tandis que le bord supérieur de la plaque 27 présente une encoche 40 ouverte vers le haut. Les encoches 39 et 40 ont des largeurs et des longueurs telles qu'elles permettent aux plaques 38 et 27 de s'emboîter en force.

Le bord inférieur de la plaque de cloisonnage 27 présente, au voisinage du point d'intersection, deux encoches 41 et 42 qui coopérent respectivement avec une encoche 43 dans le bord supérieur vertical de la goulotte 22 et une encoche 44 dans le bord supérieur vertical de la goulotte 23. Ces encoches permettent d'emboîter en force les bords supérieurs des goulottes 22 et 23 dans celles de la plaque 27 et, en conséquence, d'assurer les positions des parois des goulottes. Il suffit, après avoir effectué les emboîtements, de réaliser des soudures en angles pour obtenir un empilage rigide indéformable.

L'ensemble empilable de la Fig. 2 comporte également deux plaques de renfort longitudinales 31 et 32 qui sont montées sur les faces latérales, entre les parois latérales des goulottes externes 21 et 24, d'une part, et les supports latéraux consitués respectivement par les barres 33 et 34, et les pieds 35, d'autre part.

Par ailleurs, comme le montre la Fig. 2, la variante de réalisation de l'ensemble empilable permet la cuisson de produits alimentaires qui, pendant la cuisson, sont pressés. C'est pourquoi l'ensemble de la Fig. 2 comprend non seulement quatre goulottes 21 à 24 mais encore respectivement sous chaque goulotte, quatre couvercles 51 à 54. Bien entendu, quand de tels ensembles sont empilés, les couvercles faisant partie d'un ensemble doivent coïncider exactement avec les embouchures des goulottes de l'ensemble immédiatement inférieur, pour y pénétrer et y presser les produits à cuire. Le positionnement des coucercles doit donc être précis.

A cet effet, entre les plaques de renfort 31 et 32, on prévoit deux plaques transversales 55 et 56 servant de poutres qui, d'une part, supportent les fonds de goulottes 21 à 24 et auxquelles, d'autre part, sont accrochés les couvercles 51 à 54. Les plaques poutres 55 et 56 sont respectivement situées pratiquement sous le premier quart et le dernier quart des goulottes.

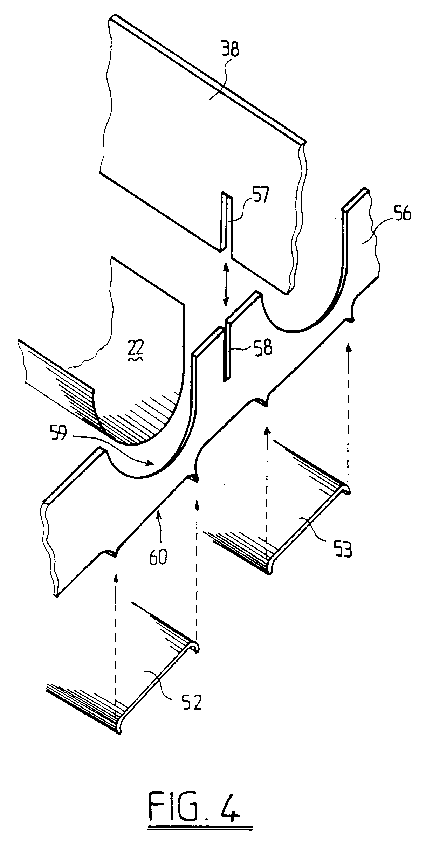

La vue éclatée de la Fig. 4 montre, en détail, le point d'intersection d'une plaque longitudinales 38 et de la plaque poutre transversale 56. Le bord inférieur de la plaque 38 présente une encoche 57 ouverte vers le bas tandis que le bord supérieur de la plaque 56, entre deux goulottes, présente une encoche 58 ouverte vers le haut. Les encoches 57 et 58 ont des largeurs et des longueurs telles qu'elles permettent aux plaques 38 et 56 de s'emboîter en force.

Entre deux points d'intersection avec des plaques 38, le bord supérieur de la plaque poutre 56, comme celui de la plaque poutre 55, présente une découpe 59 qui correspond au profil du fond d'une goulotte, dans la variante montrée un profil semi-circulaire. Par ailleurs, juste sous la découpe 59, le bord inférieur de la plaque poutre 56, comme celui de la plaque poutre 55, présente une découpe 60 dans laquelle se loge le dessus d'un couvercle, tel que 51 à 54. Il apparaît que les plaques 38 et les plaques poutres 55 et 56 forment, une fois assemblées, une structure rigide qui assure les positionnements corrects des goulottes et des couvercles lors de l'empilage des ensembles.

Les parties inférieures 36 et 37 des plaques de renfort 31 et 32, qui descendent légèrement au-dessous du plan des bords inférieurs des couvercles 51 à 54, sont respectivement rabattues à 90° vers l'intérieur pour former des surfaces planes horizontales qui servent d'appui éventuel sur les fourches d'un chariot élévateur destiné à manipuler l'ensemble.

Pour obtenir une meilleure précision, les encoches et les découpes mentionnées ci-dessus sont découpées au laser. Bien entendu, les liaisons définitives sont assurées, à tous les points d'intersection ainsi qu'aux liaisons avec les plaques de renfort, par soudures en angles, ce qui permet d'obtenir la parfaite rigidité de l'ensemble.

## Revendications

1. Ensemble empilable de récipients destiné à contenir des produits alimentaires pendant leur cuisson, constitué essentiellement de goulottes longitudinales (1 à 4; 21 à 24) qui forment les récipients et qui sont disposées les unes à côté des autres, caractérisé en ce qu'il comporte une pluralité de plaques transversales de cloisonnage (7 à 9; 27 à 29) qui enjambent les goulottes (1 à 4; 21 à 24) successivement et qui ont chacune, en face de chaque goulotte, un profil qui épouse la forme de la goulotte, au moins dans sa partie supérieure, de manière à laisser dans le bas de chaque plaque un espace libre entre elle et le fond de la goulotte, des encoches (41 et 42) ouvertes vers le bas étant prévues dans chaque plaque transversale de cloisonnage (27 à 29) en face respectivement de chaque portion verticale de paroi de goulotte, et une encoche (43, 44) ouverte vers le haut étant prévue dans chaque partie verticale de paroi de goulotte en face desdites encoches (41 et 42).

2. Ensemble suivant la revendication 1, caractérisé en ce qu'entre deux goulottes voisines, est ménagé un espace vide (10; 30) qui améliore les échanges thermiques du fluide caloporteur et qui facilite le lavage après utilisation.

3. Ensemble suivant la revendication 1 ou 2, caractérisé en ce que, dans les espaces libres (30) entre deux goulottes voisines (22 et 23), des plaques longitudinales verticales (38) sont montées entre les plaques transversales de renfort avant et arrière, reliées aux extrémités frontales des goulottes (21 à 24), (25 et 26), à chaque point d'intersection avec une plaque transversale de cloisonnage (27 à 29), la plaque longitudinale (38) présentant une encoche (39) ouverte vers le bas de largeur correspondant à l'épaisseur de la plaque transversale de cloisonnage (27 à 29) et chaque plaque transversale de cloisonnage (27 à 29) présentant une encoche (40) ouverte vers le haut de largeur égale à l'épaisseur de la plaque longitudinale (38), les deux encoches (39 et 40) étant emboîtées, puis soudées.

4. Ensemble suivant la revendication 3, caractérisé en ce qu'entre les plaques longitudinales de renfort (31, 32) reliées aux parois externes des goulottes externes (21, 24), sont prévues des plaques poutres transversales verticales (55, 56) dont le bord supérieur de chacune présente, sous chaque goulotte (21 à 27), une première découpe (59) correspondant au profil du fond d'une goulotte, à chaque point d'intersection avec une plaque longitudinale (38), le bord supérieur de la plaque poutre (55, 56) présente une encoche (58) qui coopère avec une encoche (57) du bord inférieur de la plaque longitudinale (38), les deux encoches (57, 58) étant emboîtées.

5. Ensemble suivant la revendication 4, caractérisé en ce que le bord inférieur de chaque plaque poutre (55, 56) présente, juste au-dessous de la première découpe (59), une seconde découpe (60) qui correspond au profil du dessus d'un couvercle (51 à 54) à laquelle celui-ci est accroché.

6. Ensemble suivant l'une des revendications 1 à 5, caractérisé en ce qu'entre les supports latéraux constitués chacun par une barre longitudinale (13, 14, 33, 34) munie de deux pieds (15, 35) à chacune de ses extrémités et les parois externes des goulottes externes (1, 4; 21, 24), sont respectivement montées des plaques longitudinales de renfort (11, 12; 31, 32) longitudinales et verticales qui descendent au-dessous du plan horizontal des fonds des goulottes et éventuellement des bords des couvercles, mais restent au-dessus des extrémités inférieures des pieds (15; 35), et dont la partie inférieure (16, 17; 36, 37) est rabattue vers l'intérieur, de façon à créer une surface support qui associée à celle de l'autre plaque de renfort peut être soulevée par les fourches d'un chariot élévateur.

## Claims

1. Stackable set of containers designed to contain food products during cooking, essentially made up of longitudinal channels (1 to 4; 21 to 24) which form the containers and which are arranged side by side, characterized in that it includes a plurality of transversal partitioning plates (7 to 9; 27 to 29) which span the channels (1 to 4; 21 to 24) in turn and each of which has, opposite each channel, a profile which takes the exact form of the channel, at least in its upper portion, in such a way as to leave a free space at the bottom of each plate between it and the bottom of the channel, slots (41 and 42) which are open towards the bottom being provided in each transversal partitioning plate (27 to 29) respectively opposite each vertical portion of channel wall, and a slot (43, 44) which is open towards the top being provided in each vertical portion of channel wall opposite said slots (41 and 42).

2. Set of containers according to Claim 1, characterized in that an empty space (10; 30) is provided between two adjacent channels, which improves the heat-transfer of the heat-conveying liquid and which facilitates washing after use.

3. Set of containers according to Claim 1 or 2, characterized in that, in the free spaces (30) between two adjacent channels (22 and 23), vertical longitudinal plates (38) are fitted between the front and rear transversal reinforcing plates, joined to the front ends of the channels (21 to 24), (25 and 26), and at each point of intersection with a transversal partitioning plate (27 to 29), the longitudinal plate (38) has a slot (39) which is open towards the bottom and has a width corresponding with the thickness of the transversal partitioning plate (27 to 29) and each transversal partitioning plate (27 to 29) has a slot (40), which is open towards the top and has a width equal to the thickness of the longitudinal plate (38), the two slots (39 and 40) being interlocked, then welded.

4. Set of containers according to Claim 3, characterized in that, between the longitudinal reinforcing plates (31, 32) joined to the outer walls of the outer channels (21, 24), vertical transversal girder plates (55, 56) are provided, the upper edge of each one having, underneath each channel (21 to 27), a first cut-out (59) corresponding with the profile of the bottom of a channel, and at each point of intersection with a longitudinal plate (38), the upper edge of the girder plate (55, 56) has a slot (58) which co-operates with a slot (57) in the lower edge of the longitudinal plate (38), the two slots (57, 58) being interlocked.

5. Set of containers according to Claim 4, characterized in that the lower edge of each girder plate (55, 56) has, directly below the first cut-out (59), a second cut-out (60) corresponding with the profile of the upper part of a cover (51 to 54) onto which the latter is hooked.

6. Set of containers according to one of Claims 1 to 5, characterized in that, between the lateral supports each made up of a longitudinal bar (13, 14, 33, 34) provided with a leg (15, 35) at each end and the outer walls of the outer channels (1, 4; 21, 24), longitudinal vertical reinforcing plates (11, 12; 31, 32) are respectively fitted which drop below the horizontal plane of the bottoms of the channels and possibly of the edges of the covers but remain higher than the lower ends of the legs (15; 35), and of which the lower portion (16, 17; 36, 37) is turned inwards, so as to form a supporting surface which, in conjunction with that of the other reinforcing plate, can be raised by the forks of a fork lift truck.

## Patentansprüche

1. Stapelbare Behältereinheiten, die Nahrungsmittel während ihres Kochvorgangs enthalten, und die im wesentlichen aus länglichen Hohlkehlen (1 bis 4, 21 bis 24) bestehen, welche die Behälter bilden und die jeweils Seite an Seite angeordnet sind,
**dadurch gekennzeichnet**, **daß**
sie eine Vielzahl von querliegenden Trennwänden (7 bis 9; 27 bis 29) enthält, welche sukzessive die Hohlkehlen (1 bis 4; 21 bis 24) überspannen und die jeweils gegenüber den einzelnen Hohlkehlen ein Profil aufweisen, welches der Form dieser Hohlkehle mindestens in ihrem oberen Teil entspricht, um an der Unterseite jeder der Trennwände einen Freiraum zwischen diesen und dem Boden der Hohlkehle zu belassen, und daß jede dieser Trennwände (27 bis 29) mit nach unten offenen Einkerbungen (41 und 42) ausgestattet ist, die jeweils gegenüber dem vertikalen Teil der Wand der Hohlkehle vorgesehen sind, und dadurch, daß eine nach oben offene Einkerbung (43, 44) in jedem vertikalen Teil der Wand einer Hohlkehle gegenüber diesen Einkerbungen (41 und 42) vorgesehen ist.

2. Stapelbare Behältereinheiten nach Anspruch 1,
**dadurch gekennzeichnet**, **daß**
zwischen zwei benachbarten Hohlkehlen ein Hohlraum (10; 20) vorgesehen ist, welcher den Wärmetausch des flüssigen Kühlmittels verbessert und die Reinigung nach dem Gebrauch vereinfacht.

3. Stapelbare Behältereinheiten nach einem der Ansprüche 1 oder 2,
**dadurch gekennzeichnet**, **daß**
in den Freiräumen (30) zwischen zwei benachbarten Hohlkehlen (22 und 23) vertikale Längswände (38) jeweils zwischen den vorderen und hinteren Verstärkungswänden montiert sind, welche mit den Vorderseiten der Hohlkehlen (21 bis 24), (25 und 26) verbunden sind, wobei an jedem Schnittpunkt mit einer querliegenden Trennwand (27 bis 29) die Längswand (38) eine nach unten offene Einkerbung (39) mit einer Breite aufweist, welche der Wandstärke der querliegenden Trennwand (27 bis 29) entspricht, und dadurch, daß jede der querliegenden Trennwände (27 bis 29) eine nach oben offene Einkerbung (40) mit einer Breite aufweist, welche der Wandstärke der Längswand (38) entspricht, und dadurch, daß diese beiden Einkerbungen (39 und 40) ineinandergesteckt und dann verschweißt werden.

4. Stapelbare Behältereinheiten nach Anspruch 3,
**dadurch gekennzeichnet**, **daß**
zwischen den länglichen Verstärkungswänden (31, 32), welche mit den Außenwänden der äußeren Hohlkehlen (21, 24) verbunden sind, vertikale querliegende Trägerplatten (55, 56) vorgesehen sind, deren Oberkante unter jeder der Hohlkehlen (21 bis 27) einen ersten Ausschnitt (59) aufweist, welcher dem Profil des Bodens einer Hohlkehle entspricht, wobei an jedem Schnittpunkt mit einer Längswand (38) die Oberkante der Trägerplatte (55, 56) eine Einkerbung aufweist, welche mit einer Einkerbung (57) in der Unterkante der Längswand (38) zusammenwirkt, und dadurch, daß diese beiden Einkerbungen (57, 58) ineinandergesteckt werden.

5. Stapelbare Behältereinheiten nach Anspruch 4,
**dadurch gekennzeichnet**, **daß**
die Unterkante der Trägerplatten (55, 56) genau über dem ersten Ausschnitt (59) einen zweiten Ausschnitt (60) aufweist, welcher dem oberen Profil eines Deckels (51 bis 54) entspricht, an dem diese befestigt ist.

6. Stapelbare Behältereinheiten nach einem der Ansprüche 1 bis 5,
**dadurch gekennzeichnet**, **daß**
zwischen den Seitenhalterungen, die jeweils aus einer länglichen Stange (13, 14, 33, 34) bestehen, die an jedem ihrer Enden mit zwei Fußteilen (15, 35) ausgestattet ist, und den Außenwänden der äußeren Hohlkehlen (1, ; 21, 24) jeweils längliche und vertikale Verstärkungswände (11, 12; 31, 32) vorgesehen sind, die auf die horizontale Ebene der Böden der Hohlkehlen und eventuell bis auf die Kanten der Deckel herabreichen, jedoch oberhalb der unteren Enden der Fußteile (15; 35) enden und deren unterer Teil (16, 17; 36, 37) nach innen umgebogen ist, um so eine Stützfläche zu bilden, die verbunden mit derjenigen der anderen Stützplatte mit Hilfe eines Gabelstapler angehoben werden kann.
